# EUROPEAN PATENT APPLICATION

(11) **EP 0 528 100 A1**
(43) Date of publication of application: **24.02.1993**
(21) Application number: 92102169.7
(22) Date of filing: 10.02.1992
(51) Int. Cl.: G02B 21/00, G02B 21/24

(54) **Portable optical microscope**

(30) Priority: 21.08.1991 IT MI912274
(71) Applicant: S.p.A. ITALIANA LABORATORI BOUTY, I-20129 Milan (IT)
(72) Inventor: Ronchi, Gian Maria, I-20030 Bovisio Masciago, Milano (IT)
(74) Representative: De Nova, Roberto

(57) **Abstract**

A portable optical microscope comprises a hollow body (2), a light source (14), an eyepiece (5), and a seat (7) for receiving a slide (4) which is selectively shut by a slider (8) guided for movement onto the body (2) against respective spring means (9). Advantageously, the slider (8) also turns on when the seat (7) is shut, the light source (14) by closing an electrical connection (26) to means of power supply (11).

## Description

This invention relates to a portable optical microscope of a kind which comprises a hollow body, a light source within said body, an eyepiece associated with the body and defining an optical axis in conjunction therewith, a slide-receiving seat formed in said body transversely to said optical axis, and a power supply means connected to said light source through a normally open connection.

The optical microscope of this invention has a preferred, though not exclusive, application in so-called "instant" fertility tests based on visual examination of crystallized saliva or uterine cervix mucus.

In the field of optical microscopes in general, and of those useful for fertility tests in particular, there has been a growing demand for instruments of extremely small size and weight, as much as possible easy and practical to carry and use.

To this aim, the prior art has developed portable microscopes, having an optical system of substantially negligible size, based on the utilization of the magnifying power provided by a small transparent sphere.

In such microscopes, the optical system is, therefore, fully incorporated into a highly compact eyepiece, in turn mounted within a hollow body which is substantially parallelepipedic in shape and provided with a slide-receiving seat and slide illuminating means.

While known types of portable microscopes can afford satisfactory overall performance, they are somewhat deficient as regards their ability to retain a slide in position.

In fact, the slide is positioned in its seat, where it is held down by a small clip, transversely to the hollow body such that projecting portions of the slide may not only impede the specimen viewing steps but also increase the possibility of accidental slide ruptures.

A further drawback of known microscopes is that the slide illuminating means, being operated by means of a switch on the outer surface of the hollow body, may be inadvertently left on, thereby exhausting its power source, usually a dry battery.

The technical problem which underlines the present invention is, therefore, that of providing a portable optical microscope which is extremely compact in size and, at the same time, free of the drawbacks with which the prior art is beset.

This problem is solved according to the invention by a portable optical microscope as indicated hereinabove which is characterized in that it further comprises a slider guided for movement onto said body, against the bias of respective spring means, between a first position where it shuts said seat and a second position, away from said seat, where it closes said electrical connection, means being provided for retaining said slider in said second position.

Advantageously, said slider-retaining means is the slide itself, once positioned in its seat.

It follows that the opening or closure of the electric connection is tied to the slide positioning with respect to its seat, so that it is completely eliminated the possibility that the light source be inadvertently left on.

Further features and advantages of the invention will become more clearly apparent from the following detailed description of a preferred embodiment thereof, given by way of example and not of limitation with reference to the accompanying drawings, in which:
Figure 1 is a perspective view of a portable optical microscope according to the invention;
Figure 2 is an enlarged scale, longitudinal section view of the microscope shown in Figure 1;
Figures 3 and 4 are respectively part-sectional and exploded perspective views of the microscope of Figure 1; and
Figures 5 and 6 show schematically the microscope of Figure 1 in its rest and work conditions, respectively.

With reference to the drawing views, generally shown at 1 is a portable optical microscope according to the invention.

The microscope 1 includes a hollow body 2 which is cylindrical in shape and has an eyepiece 5 incorporating a sphere 6 which constitutes the magnifying member of the microscope.

An optical viewing axis x-x is defined centrally to the eyepiece 5 and the body 2 for viewing a specimen disposed on a slide 4. The latter is received in a respective seat 7 formed in the body 2 transversely to the optical axis x-x and selectively shut by a slider 8 fitted on the body 2 for sliding movement against the bias of respective spring means 9, in this instance a helical spring.

A seat 10 is defined in the hollow body 2 for accommodating a power supply means 11 such as a dry battery, together with its contact spring 12.

The microscope 1 includes a light source 14, such as a filament lamp, housed in a holder 13 having a cylindrical tubular body 15 with a top-mounted head portion 16 from which a plurality of integral lugs, denoted by the references 17-20, extend.

The holder 13 is associated with the body 2 through a basically bayonet-type joint comprising a pair of dogs 21, 22 which protrude into the seat 10 from opposite sides of the body 2 and engage in corresponding sockets formed in the outer surface of the body 15 on opposite sides thereof.

Each of said sockets, identical with each other, is defined by a substantially L-shaped rib; of these sockets, the one intended for receiving dog 21 is shown in the drawing figures at 23.

Electrical contacts 24, 25, comprised of suitably shaped metal plates, are positioned in the body 15 of the holder 13 on opposite sides with respect to the lamp 14.

Said contacts 24, 25 define, in conjunction with the spring 12 housed in the hollow body 2 and the spring means 9 carried on the slider 8, a connection 26 adapted to interconnect electrically the lamp 14 with the battery 11.

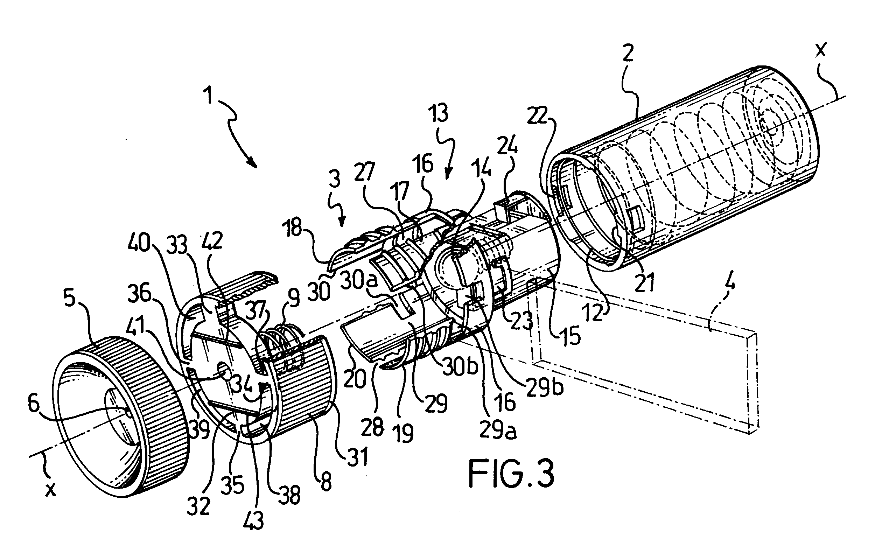

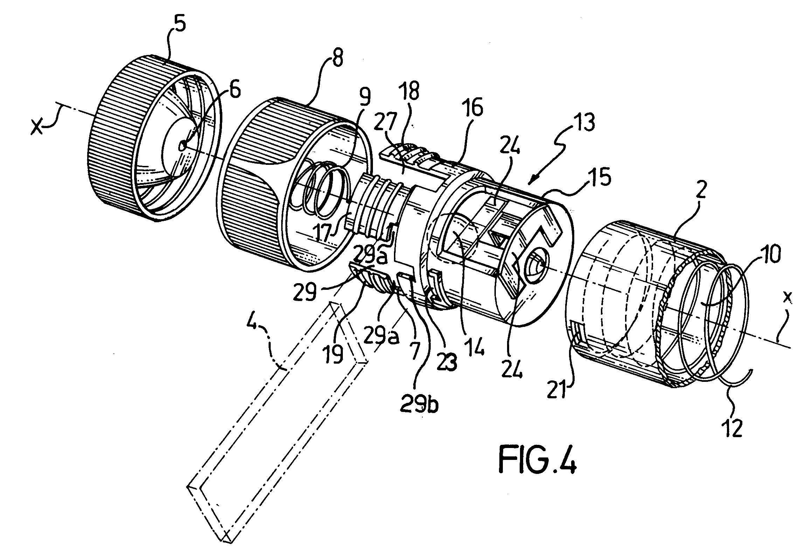

As may be appreciated from Figures 3 and 4 of the accompanying drawings, the lugs 17-20 extend integrally from the head portion 16 of the holder 13 along circular arcs which have predetermined lengths and are threaded externally.

Thus, said lugs define in the holder 13 a first pair of slots, indicated at 27, 28, which are formed in diametrically opposite sections of the head portion 16, respectively between lugs 17 and 18, and lugs 19 and 20, and a second pair of slots 29, 30 of prevailing width, also formed in diametrically opposed sections of the head portion 16 between the lugs 17 and 19, and the lugs 18 and 20.

Also as shown in Figures 3 and 4, the opposite slots 27 and 28 are terminated substantially at level of the head portion 16, and the slots 29 and 30 of prevailing width have end portions which are substantially T-shaped and have a first wider section 29a, 30a extending perpendicularly to the axis x-x, and a second, narrower, section 29b, 30b lying parallel to said axis x-x.

The sections 29a and 30a of the slots 29 and 30 define the seat 7 for receiving the slide 4, in co-operation with the slider 8 and the eyepiece 5 as explained hereinafter.

The width and height dimensions of the portions 29a and 30a are, in fact, selected to substantially match those of the slide 4 to be viewed through the microscope 1.

The slider 8, adapted to removably shut the seat 7 wherein the slide 4 is received, comprises basically a collar 31 closed at one end by a diaphragm 32 carried by arms 33-36 which extend radially crosswise therefrom.

Said arms define in the collar 31 four slits 37-40, each adapted to be engaged by the lugs 17-20. Conversely, the arms 33-36 are guided for sliding movement in the slots 27-30 formed between said lugs.

Advantageously, to enable proper positioning of the slider 8 on the holder 13, the slot 27 formed between lugs 17 and 18, and the arm 33 have a width greater than that of the juxtaposed slot 28 and arm 35.

The diaphragm 32 of slider 8 is also passed through by a hole 41 extending coaxial with the optical axis x-x of the microscope 1, and is provided with parallel ribs 42, 43 projecting from the diaphragm.

Advantageously, the ribs 42 and 43 laterally delimit the seat 7 which receives the slide 4, their mutual spacing being substantially equal to the width of the portions 29a and 30a of the slots 29 and 30 lying transversely to the optical axis x-x, that is substantially equal to the width of the slide 4.

It matters to observe, with reference to the drawing figures, that the eyepiece 5 is threaded internally such that it can be associated with the holder 13 by screw engagement over the lugs 17-20.

Lastly, it is noteworthy that the slider 8 and eyepiece 5 have knurled outer surfaces for a more convenient handling by the user.

To examine a specimen, e.g. crystallized saliva in fertility tests, by means of the microscope 1 of this invention, one should proceed as follows.

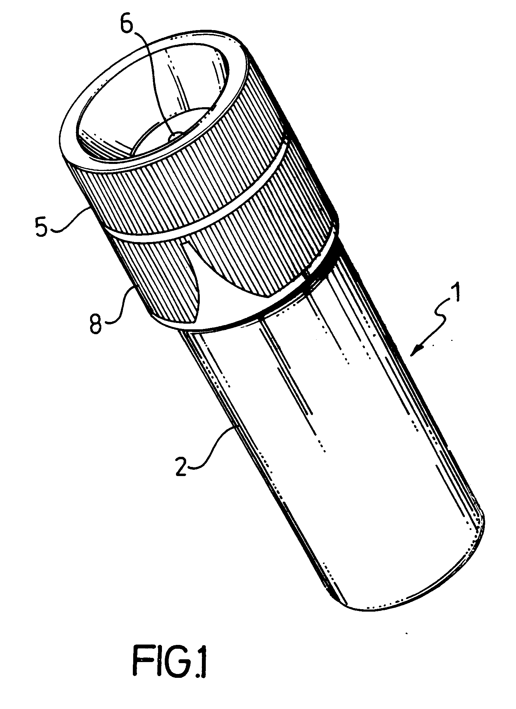

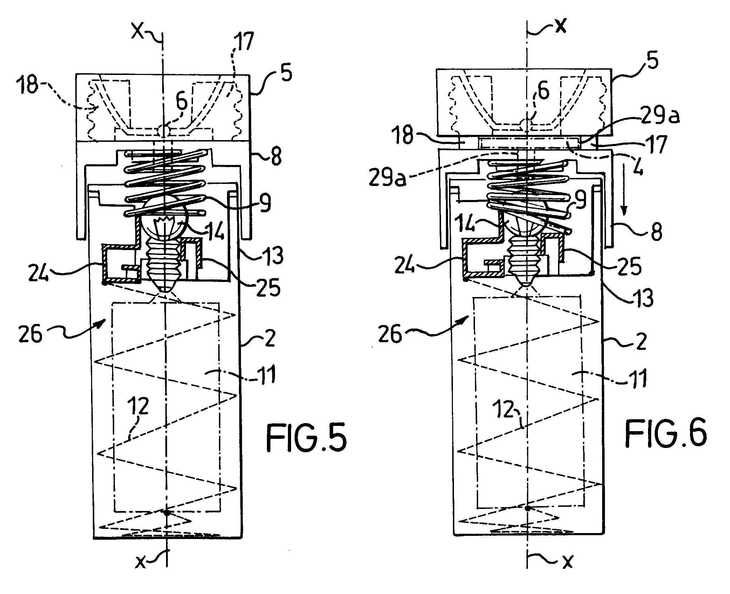

The microscope, prior to introducing the slide therein has the configuration illustrated by Figures 1 and 5, to be referred to hereinafter as the rest condition.

As clearly visible in Figure 5, in this condition the seat 7 for receiving the slide 4 cannot be accessed, due to the slider 8 being constantly biased towards the eyepiece 5 by its spring means 9. The latter, being attached to the diaphragm 32 in a manner known per se, will bear, in fact, against the contact 24 that forms a positive stop therefor.

In this condition, the electrical connection 26 between the battery 11 and the lamp 14 is open at the very location of the spring means 9, there being no electrical linkage with contact 25 (Figure 5).

To enable the slide 4 to access the seat 7, it will be sufficient to move the slider 8 away from the eyepiece 5 against the spring means 9.

The sliding movement of the slider 8, as guided by the arms 33 and 35 engaging in the slots 27 and 28, comes to an end when the arms 34 and 36 are received fully within the sections 29b and 30b of the slots 29 and 30 which form a positive stop therefor.

For enhanced accuracy in the slider 8 positioning, the slider travel may be limited by a peg protruding from the diaphragm 32 of slider 8, inwardly into the collar 31, or by some other positive stop means.

With the slider 8 all the way down, the seat 7 - delimited at the top by the eyepiece 5, at the bottom by the diaphragm 32 of slider 8, and laterally by the sections 29a and 30a and the ribs 42 and 43 - can be readily accessed by the slide 4, by just slipping the same into it.

Thus, the slide 4 will, when introduced into the seat 7, provide by itself a means of holding the slider away from the seat 7.

On the other hand, the slider 8 being biased by its spring means 9 constantly toward the eyepiece 5 will, in turn, develop an effective locking action on the slide 4 in the seat 7 upon removal of the manual shifting action of the user.

Advantageously, the slide may be provided with markings which allow a correct positioning of the specimen in line with the optical axis x-x of the microscope 1.

Concurrently with the downward movement of the slider 8, and therefore as the seat 7 is opened, the electrical connection 26 between the battery 11 and the lamp 14 is closed and the lamp turned on.

The downward movement of the slider results, in fact, in the spring means 9 being correspondingly deformed into contact with the plate 25, and the electrical connection 26 closed.

Thus, the turn-on function for the light source 14 is triggered by the introduction of the slide 4 into the seat 7 for observation under the microscope.

The latter will therefore be in its operational condition as shown in Figure 6.

On completion of the specimen observation, the slide can be withdrawn from its seat by moving the slider 8 away from the slide; the spring means 9 will then automatically urge the slider again toward the eyepiece 5, so as to shut the seat 7 and reopen the electrical connection 26.

Thereupon, the microscope is restored to its rest condition as shown in Figure 5.

The microscope 1 of this invention affords the following advantages over prior-art portable microscopes:
simple and easy connection of the eyepiece/slider assembly to the hollow body 2;
lighting of the light source subject to the presence of the slide in its seat; and
highly effective retention of the slide in its seat on account of the slider 8 being constantly urged towards it by the spring means 9 during the specimen observation step.

A not least advantage is that the microscope 1 comprises molded plastics parts which account for a lower manufacturing cost.

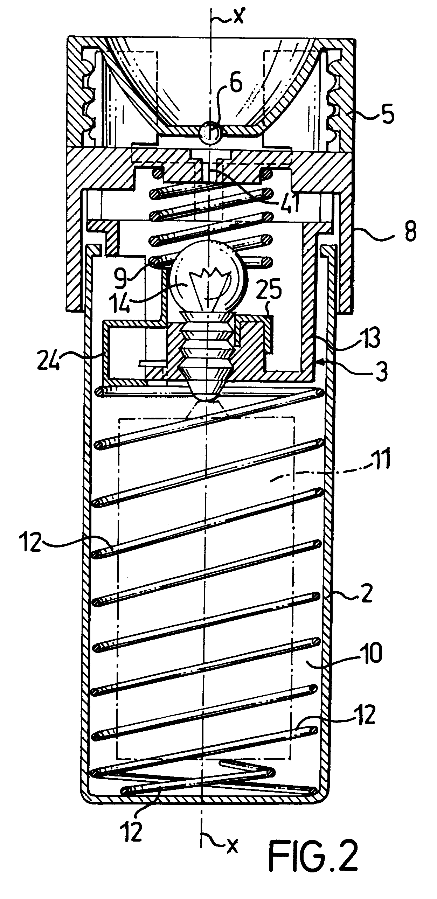

Understandably, the invention as described in the foregoing with reference to Figures 1 to 6 may be variously altered and modified to fill specific and contingent applicational demands, which changes would fall within the scope of this invention as defined in the appended claims.

## Claims

1. A portable optical microscope of a kind which comprises a hollow body (2), a light source (14) within said body (2), an eyepiece (5) associated with the body (2) and defining an optical axis (x-x) in conjunction therewith, a slide-receiving seat (7) formed in said body (2) transversely to said optical axis (x-x), and power supply means (11) connected to said light source (14) through a normally open electrical connection (26), characterized in that it further comprises a slider (8) guided for movement onto said body (2), against the bias of respective spring means (9), between a first position where it shuts said seat (7) and a second position, away from said seat (7), where it closes said electrical connection (26), means being provided for retaining the slider (8) in said second position.

2. A microscope according to Claim 1, characterized in that said means comprises a slide (4) positioned in said seat (7).

3. A microscope according to Claim 1, characterized in that said light source (14) comprises a lamp mounted on a respective holder (13) associated with said body (2) through a substantially bayonet-type joint.

4. A microscope according to Claim 3, characterized in that said eyepiece (5) is associated with said body (2) by screw engagement onto a plurality of externally threaded lugs (17-20) protruding in mutually spaced relationship from said holder (13).

5. A microscope according to Claim 3, characterized in that said slide-receiving seat (7) is formed in said holder (13) between said eyepiece (5) and said slider (8).

6. A microscope according to Claim 3, characterized in that said slider (8) comprises a collar (31) having at one end a diaphragn (32) carried by a plurality of arms (33-36) defining a corresponding plurality of slits (37-40), said collar (31) being guided for sliding movement on said holder (13) by engagement of said lugs (17-20) in said slits (37-40).

7. A microscope according to Claims 4 and 6, characterized in that said seat (7) is laterally delimited by a plurality of slots (29a,30a) formed in said lugs (17-20) and a pair of parallel ribs (42,43) projecting from said diaphragm (32).

8. A microscope according to Claim 6, characterized in that said spring means (9) comprises a helical spring attached to said diaphragm (32).

9. A microscope according to Claim 1, characterized in that said electrical connection (26) comprises a spring (12) housed in said body (2), first (24) and second (25) contact plates positioned on said holder (13) at juxtaposed locations with respect to said light source (14), and said spring means (9).
